# EUROPEAN PATENT SPECIFICATION

(11) **EP 1 337 073 B1**
(45) Date of publication and mention of the grant of the patent: **08.12.2004**
(21) Application number: 02360354.1
(22) Date of filing: 17.12.2002
(51) Int. Cl.: H04L 12/24, H04L 29/08, G06F 9/445

(54) **Process and apparatuses for software installation in a network management system by means of a central utility server**
Verfahren und Vorrichtungen zur Software-Installation in einem Netzverwaltungssystem mittels eines zentralen Diensteservers
Procédé et dispositifs pour l'installation de logiciel dans un système de gestion de réseau au moyen d'un serveur d'utilité central

(30) Priority: 14.02.2002 DE 10206009
(43) Date of publication of application: 20.08.2003
(73) Proprietor: ALCATEL, 75008 Paris (FR)
(72) Inventor: Daase, Detlef, 12205 Berlin (DE); Kaufmann, Heinz-Peter, 12109 Berlin (DE)
(74) Representative: Brose, Gerhard, Dipl.-Ing.

(56) References cited:
- WO-A-01/26336
- WO-A-01/43390
- US-A- 5 602 993
- US-A- 6 105 066

## Description

The invention relates to a process for supporting the installation of first program codes on network elements of one or more telecommunication networks. The invention further relates to a utility server and a network management server for performance of the process.

The invention arises from the process normally used in telecommunications technology for the installation of "patches".

"Patches" are small software packets which must be installed on a multiplicity of network elements of a telecommunication network to correct errors or improve performance. These "patches" are loaded onto the network elements by the operator of the telecommunication network. They can then be installed in the software of the network elements by means of remote access by the operators.

The disadvantage of this process is that it is very time-consuming and requires a high training level of the operator.

Documents dealing with remote network distribution of software from a centralized server, containing the software to be downloaded, to computing devices attached to the network infrastructure which need such software, are already known. For example, in WO 01/26336 a configuration infrastructure that allows computing devices to dynamically bootup and attach to a multimedia network domain is described. In such network configuration, a software distribution and downloading service allows distribution and downloading of controller code for remote installation of controllers and system components. Also, in US 5,602,993, a method and an arrangement for revising selected data in a distributed data communication system is disclosed. Said revision involves, for instance, installing and/or removing and/or changing the selected data. On the same field, WO 01/43390 describes a service management access node comprising a mobile network interface, an Internet interface, and a service conversion and message relaying platform for provision of Internet content and download of software updates to mobile subscribers.

The invention is now based on the object of improving the installation of program codes on network elements of a telecommunication network.

The object is achieved by a process to support the installation of first program codes on elements of one or more telecommunication networks according to the teaching of claim 1. The object is further achieved by a utility server to support the installation of first program codes on elements of a telecommunication network according to the teaching of claim 7. The object is further achieved by a network management server of a network management system of a telecommunication network to support the installation of first program codes on elements of the telecommunication network according to the teaching of claim 12.

The invention is based on the concept that program codes intended to be integrated in program codes installed on network elements are stored centrally on a utility server. The server offers these program codes to operators who access the utility server by means of their network management system. By means of the network management system program codes are selected from the codes present on the server and installed on the network elements administered by the management system concerned.

The invention has the advantage that it is possible to automate largely or completely the integration of program code into program codes already installed on network elements. It is further possible to use operators with a lower training level and reduce the operator time necessary for installation.

A further advantage is that the installation of program codes in a multiplicity of network elements of different telecommunication networks is made more flexible and faster.

A further advantage is that the availability of the telecommunication network is increased and errors in software installation are largely avoided. The security of the entire system is thus increased.

Further advantages arise if the utility server is operated by an independent service operator or technology supplier. This reduces the expense of the individual network operators and hence the total expense.

It is advantageous if two or more utility servers are available which provide program codes allocated to different groups of network elements. Thus for each group of network elements a specific utility server is available. This division of work simplifies the updating of the program codes.

It is also advantageous if the utility server calculates a specific preselection of program codes for the network operator. This makes it easier for an operator of a telecommunication network to install on network elements the program codes suitable for his particular installation. It is also advantageous that the respective network management systems transmit data related to the network elements they administer to the central utility server. Thus it is possible to calculate a preselection particularly well-suited to the particular requirements of the network management system concerned.

It is also advantageous if descriptive data related to program codes are stored centrally in the utility server and transmitted to the network management systems to support the selection of program codes. This further increases the efficiency of the entire system.

It is also advantageous if the utility server determines a specific installation code for a selected program code and transmits this with the program code to the network management system. This further reduces the operator time required for installation of the program code and further reduces the skill demands on the operator of the telecommunication network.

It is also advantageous if the server determines a specific test code for a selected program code and transmits this with the program code to the network management system. This further increases the security of the entire system and makes it even more flexible.

The invention is explained in more detail below with reference to several embodiment examples using the enclosed drawings.
- Figure 1: shows a block circuit diagram of a system with several telecommunication networks and several utility servers according to the invention,
- Figure 2: shows a functional view of a utility server according to the invention in figure 1, a network management server according to the invention and several network elements.

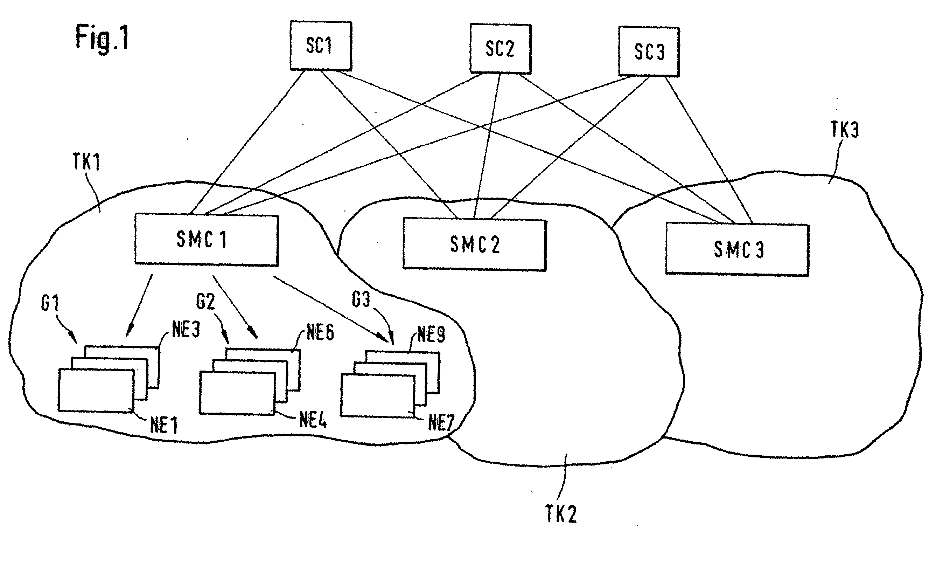

Figure 1 shows three utility servers SC1, SC2 and SC3 and three telecommunication networks TK1, TK2 and TK3.

Each telecommunication network TK1, TK2 and TK3 is a telephone network, for example according to ISDN standard (ISDN = Integrated Services Digital Network). The telecommunication networks TK1, TK2 and TK3 can however also be data networks which use for example as a connecting layer a TCP/IP protocol stack (TCP = Transmission Control Protocol, IP = Internet Protocol). It is further possible that the telecommunication networks TK1, TK2 and TK3 each serve for speech, data and video communication. It is further possible that the telecommunication networks TK1, TK2 and TK3 are each formed by several sub-telecommunication networks. For example telecommunication network TK1 can comprise a LAN network based on an Ethernet protocol, several ATM networks, a PSTN network and several mobile access networks based for example on GSM-standard (LAN = Local Area Network, ATM = Asynchronous Transfer Mode, PSTN = Public Switched Telephone Network, GSM = Global System for Mobile Communication). Naturally it is also possible for the telecommunication networks TK1, TK2 and TK3 to be different in structure.

The telecommunication networks TK1, TK2 and TK3 each have a network management system SMC1, SMC2 or SMC3.

The network management systems SMC1, SMC2 and SMC3 serve to manage the telecommunication networks TK1, TK2 or TK3 and hence administer the network elements of the telecommunication networks TK1, TK2 or TK3. They communicate with the network elements of the telecommunication network concerned and, to fulfil administration functions, exchange with these the status information and control information.

Of the elements of telecommunication networks TK1, TK2 and TK3, figure 1 shows as an example nine network elements NE1 to NE9 of the telecommunication network TK1. The network elements NE1 to NE9 are for example switch points, routers, gateways or billing servers of the telecommunication network TK1. Network elements in the sense of the invention are however also other servers of a telecommunication network which perform functions specific to a telecommunication network, for example network management or service management functions. Thus servers which for example perform an SCP functionality (SCP = Service Control Point) within an IN architecture (IN = Intelligent Network) are also network elements in the sense of the invention.

The telecommunication networks TK1, TK2 and TK3 are advantageously allocated to different network operators. Each network operator has a multiplicity of human operators who by means of the respective network management system SMC1, SMC2 or SMC3 control the relevant telecommunication network TK1, TK2 or TK3.

The utility servers SC1, SC2 and SC3 support the installation of program codes on network elements of telecommunication networks TK1, TK2 and TK3.

Servers SC1, SC2 and SC3 are connected with the network management systems SMC1, SMC2 and SMC3 via a communication medium. This communication medium is a data network. This is for example a LAN based on an Ethernet protocol. It can for example also be a MAN (Metropolitan Area Network) or ATM-based network on which a TCP/IP protocol stack is used as a connecting layer. It is also possible that the communication network is a signalling network of a telecommunication network, for example the signalling network of the telecommunication network TK1, TK2 or TK3. It is also possible that the communication medium is an interprocess communication service of an operating system or a software bus, based for example on a CORBA architecture (CORBA = Common Object Request Broker Architecture).

Utility servers SC1, SC2 and SC3 are advantageously allocated to different service operators or technology suppliers. They support the installation of program codes on a special group of network elements of telecommunication networks TK1, TK2 and TK3. This group of network elements is formed for example from the network elements produced and sold by the same technology suppliers.

It is naturally also possible for a different number of utility servers to be connected with the network management systems SMC1, SMC2 and SMC3 or a different number of network management systems to be connected with the utility servers SC1, SC2 and SC3.

The utility server SC1 is connected with the network management systems SMC1, SMC2 and SMC3 via the communication medium and the network management systems SMC1, SMC2 and SMC3 have access to the server SC1. The utility server SC1 is thus a central server for network management systems SMC1, SMC2 and SMC3.

On the utility server SC1 is stored a set of program codes intended to be integrated in program codes installed on network elements of telecommunication networks TK1, TK2 and TK3. This set of program codes is hence stored centrally in the utility server SC1 for the network management systems SMC1, SMC2 and SMC3. Similarly, utility servers SC2 and SC3 each store a set of program codes intended to be integrated in program codes installed on network elements of telecommunication networks TK1, TK2 and TK3. Advantageously the sets of program codes stored in the servers SC1, SC2 and SC3 are allocated to different groups of network elements.

The servers SC1, SC2 and SC3 restrict access to the relevant set of first program codes and allow the network management systems SMC1, SMC2 and SMC3, after performance of an authentication procedure, access to program codes of the respective set of program codes. Such access can for example consist of reading a list of program codes, the program code itself or a description of program codes. Such access can also consist of initiation of a search function in the set of program codes or selection of program codes.

One of the network management systems SMC1, SMC2 and SMC3 on access to program codes selects one program code from the set of codes. The utility server concerned transmits the selected code to the network management server of the selecting network management system. This system, for example the network management system SMC1, transmits the selected program code to one or more network elements of a telecommunication network, for example network TK1.

For example a first group G1 of network elements is formed from elements NE1 to NE3 a second group G2 of network elements from elements NE4 to NE6, and a third group G3 of network elements from elements NE7 to NE9. The sets of program codes of the servers SC1 to SC3 are allocated to groups G1, G2 or G3. The network management system SMC1 on access to the server SC1 selects a program code which it transmits to the network element NE1 to NE3. The program codes selected on access to utility servers SC2 and SC3 are also transmitted to the network elements NE4 to NE6 or NE7 to NE9.

The program codes transmitted by the network management systems SMC1, SMC2 and SMC3 are after transmission integrated in the program code installed on the network element concerned. Thus for example the program code arising from server SC1 is integrated in the program code installed on network elements NE1 to NE3.

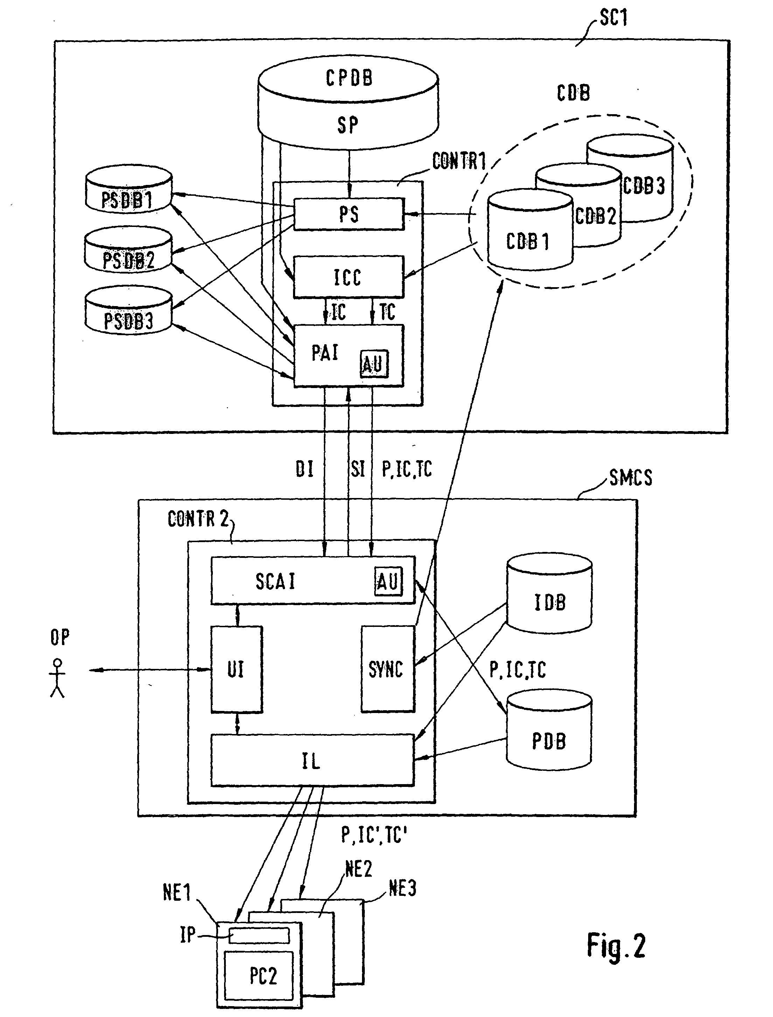

The detailed function of the process according to the invention and the detailed function of the server and network management server according to the invention are now explained as an example with reference to figure 2.

Figure 2 shows the utility server SC1, a network management server SMCS and three network elements NE1, NE2 and NE3.

The utility server SC1 is formed by one or more computers connected together and by software used on these computers. In the execution of the software of server SC1 on the hardware of server SC1, the functions described below of utility server SC1 are performed.

Functionally utility server SC1 comprises several memory units CPDB, PSDB1, PSDB2, PSDB3 and CDB, and a control unit CONTR1. Memory units CPDB, PSDB1, PSDB2, PSDB3 and CDB are each formed by databases or data structures based on the memory system of server SC1. Control unit CONTR1 is formed by the system processor or processors of server SC1 and the software of server SC1 running thereon. It is however also possible that the functions of control unit CONTR1 are divided between a multiplicity of physical computers and the control unit CONTR1 thus represents a "virtual" control unit.

In the memory unit CPDB is stored a set of program codes intended to be integrated in program codes installed on network elements. The program codes are here arranged for example in the form of a list. Further data can be allocated to each element of the list. Such data are for example description data. Description data can be for example data related to the function or function method of the program code concerned, data related to the type of network element on which the relevant program code can be installed, data related to the date of issue and organisation issuing the program code or data related to authorisation of the program code. An installation code and/or test code can also be allocated to a program code in the memory unit CPDB.

The test code is designed so that a network element can by this means check the program code already on the network element, before integration of the program code, to ensure it is compatible with the program code. In this check the test code can check the program code on the relevant network element to establish whether particular programs or program versions are present and whether their configuration meets the requirements of the program code. It is also possible for the test code to contain one or more executable test programs, the execution of which creates a result on the network element concerned by means of which it can be checked whether the necessary peripheral conditions for the program code are present. Here it is also possible for the test code to contain information related to the interpretation of the result of such a test program.

The installation code is designed so that it supports a network element in integrating the program code into the program code already on the network element concerned. The installation code contains specific instructions on how the program code should be integrated in the code already present on the network element. Such instructions can firstly concern the integration of the program code in the code already on the network element and concern any necessary adaptation of the program code or the code on the network element.

In this context a program code is an executable code for example object code or libraries, or a code to be interpreted for example Java Applets. Configuration files, data describing the information to be shown, or other data constituting input data for computer programs and influencing their function, can also be program code in this context.

Naturally it is also possible to structure the data described above differently within the memory unit CPDB.

For example it is possible to organise the program code, allocated test code, installation code and allocated description code by means of a linked list.

The memory unit CDB contains data related to network elements managed by the network management systems SMC1 and SMC3. The memory unit CDB here has three data sets CDB1, CDB2 and CDB3. Data set CDB1 contains data related to network elements of telecommunication network TK1, i.e. the elements managed by the network management system SMC1. The data sets CDB2 and CDB3 similarly contain data related to network elements of telecommunication networks TK2 and TK3.

The data set CDB1 advantageously contains description data describing the nature and linking of the network elements of the telecommunication network TK1. It is naturally also possible for data set CDB1 to contain such a description only for those elements of telecommunication network TK1 which are allocated to a group of network elements served by the utility server concerned. For example data set CDB1 contains only description data of the network elements of group G1.

The data set CDB1 can also have a distribution list describing the installation status of the elements of the telecommunication network TK1. This distribution list can firstly comprise a distribution matrix describing which of the program codes stored in memory unit CPDB are already installed on which elements of telecommunication network TK1. The distribution list can further contain details of the program codes already installed on the elements of telecommunication network TK1. The distribution list can also contain information describing the system properties of the elements of telecommunication network TK1.

The memory units PSDB1, PSDB2 and PSDB3 each contain data related to a preselection of program codes calculated by the control unit CONTR1.

From a functional aspect the functions of the control unit CONTR1 can be divided into three function units PS, ICC and PAI. Here function units PS and ICC can also be omitted. The software of the utility server SC1 is structured so that in the course of a software procedure on the hardware of server SC1, the functions of the function units PAI, ICC and PS are performed.

The function unit PAI restricts access to the set SP of first program codes stored on the memory unit CPDB. Here it allows one or more network management systems, for example network management systems SMC1, SMC2 and SMC3, after performing an authentication procedure AU, access to the program code of the set SP of program codes. In performing the authentication procedure AU for example an identification or address of the accessing network management system is checked to establish whether the identification or address is entered in a list of identifications or addresses allocated to network management systems for which access is permitted. Authentication is also possible by an additional code word, asynchronous keys or a digital signature. If access is performed by a network management system using a request message, by means of information contained in the request message and the authentication procedure, the identity of the accessing network management system is determined. For network management systems identified in a list kept by the function unit PAI as "access permitted" and hence authorised, access to program codes of the set SP of program codes is then permitted and in this way access to the set of program codes is restricted.

The identity of an accessing network management system can be checked on each individual access event i.e. for each request message. It is however also possible for the check and authentication procedure to be carried out once only for an access session and hence be valid for several request messages and access events.

Function unit PAI allows the access-authorised network management system to select a program code from the set SP of program codes. The function unit PAI for example on access by a network management system transmits data DI to the accessing system. The data DI contains for example description data related to program codes of the set SP of program codes. It can comprise all or some of the description data stored in memory unit CPDB. The data DI can here comprise all program codes of the set SP or only those codes of the set SP which are contained in a preselection of program codes specific to network management. The description data are transmitted to the network management system before selection to support the selection. The network management system then selects one or more program codes from the program codes described in data DI and transmits identification of these selected program codes in a request message SI to the function unit PAI. The program codes marked as selected in the request message SI are now treated as selected program codes by the function unit PAI. By performance of the process described above, the function unit PAI allows a network management system on access to select a program code from the set SP of program codes.

The function unit PAI now transmits the selected program code or codes to a network management server of the accessing network management system which is suitable for transmitting the selected program code or codes to one or more elements of the telecommunication network of the network management system for integration in the program code installed on the element concerned. The network management server SMCS is for example such a network management server. The address of this network management server can be contained in a request message sent by the network management system. It is also possible that the function unit PAI has a list of addresses of network management servers of different network management systems which represent such network management servers.

As one of the selected program codes P, the function unit PAI can also transmit an allocated test code TC and allocated installation code IC to these network management servers. The test code TC and installation code IC can be the test code or installation code allocated to program code P in the memory unit CPDB. It is however also possible that this can be a test code and installation code specifically modified by function unit ICC.

The function unit PS calculates a specific preselection in the set SP of program codes for one or more of the network management systems which are allowed access to the program code of the set SP. This calculation can be made on access by the network management to the program code of the set SP of codes. It is however also possible for the calculation to be made independently of the current access.

The function unit PS can calculate the specific preselection by means of data related to the elements managed by the network management system concerned. Such data is for example available in data sets CDB1, CDB2 and CDB3 of memory unit CDB. By means of the data contained there and the description data allocated to the program code of the set SP in memory unit CPDB, the function unit PS determines those program codes of the set SP which are useful and suitable for integration in the network elements of the telecommunication network concerned. By means of the data of data set CDB1 and the description data of the memory unit CPDB, it calculates a preselection for the network management system SMC1 and stores this preselection in the memory unit PSDB1. Similarly for network management systems SMC2 and SMC3, by means of the data in data sets CDB2 and CDB3 it calculates a preselection which is stored in the memory units PSDB2 or PSDB3.

It is also possible for the function unit PS to determine the specific preselection by means of criteria transmitted to it by the network management system concerned. So it is also possible to calculate the preselection without access to memory unit CDB. It is however also possible that function unit PS calculates the preselection by means of data from memory unit CDB, by means of description data from memory unit CPDB and by means of the criteria transmitted by the relevant network management system, and stores this in the respective memory unit PSDB1, PSDB2 and PSDB3.

The function unit PAI can make use of the preselection stored in the memory units PSDB1, PSDB2 and PSDB3 by identifying to an accessing network management system the preselection specifically allocated to it from the set SP of program codes. This can be achieved for example by the program codes contained in the preselection being marked in a list of program codes of set SP transmitted to the network management system.

It is also possible that the specific preselection stored in the memory units PSDB1, PSDB2 and PSDB3 is utilised by function unit PAI in that it restricts access by an accessing network management system to the program codes of the set SP which are contained in the specific preselection allocated to it. Thus an accessing network management system for example receives information only on program codes which are part of the specific preselection allocated to it.

For a selected program code, the function unit ICC calculates a specific installation code and a specific test code. For this it adapts the test code and installation code allocated to the selected program code in the memory unit CDB by means of the data stored in the memory unit CDB on the network elements managed by the network management system concerned. For this for example it adapts the general test code and installation code stored in memory unit CPDB by means of the detailed information contained in data set CDB1 on the network element or elements in which the selected program code is to be integrated in existing program code.

The specific installation code calculated by the function unit ICC, for example the installation code IC, or the specific test code calculated by the function unit ICC, for example test code TC, is then transmitted by the function unit PAI with the selected program code, for example program code P, to a network management server of the selecting network management system.

It is also advantageous that the control unit CONTR1 contains a function unit which receives from the network management systems data related to the elements managed by the network management system concerned and stores this in memory unit CDB. Here it is useful before storage of the data to check whether the transmitting network management system is a system for which access is permitted to the program codes of the data set SP.

The network management system SMC1 comprises one or more network management servers. The network management system SMC1 can also comprise one or more network management clients used for communication with the operators of the network operators of the telecommunication network TK1. Figure 2 shows as an example one network management server SMCS of the network management servers of the network management system SMC1.

The network management server SMCS is formed by one or more interconnected computers, software platforms placed on these computers and application programs running on these software platforms. In the execution of these application programs on the system platform formed by the hardware and software platforms of the network management server SMCS, the functions described below of the network management server SMCS are performed.

It is also possible and sensible for the network management server SMCS to perform, as well as the functions described below, a number of other functions. These are advantageously network management functions. It is also possible for the hardware components of the network management server SMCS to be spatially distributed and for the network management server SMCS to be a "virtual" server.

From a functional aspect the network management server SMCS has two memory units IDB and PDB and a control unit CONTR2. The memory units IDB and PDB are formed by databases or data structures placed in the memory system of the network management server SMCS. The control unit CONTR2 is formed by the system processor or processors of the network management server SMCS and the application programs of the network management server SMCS, execution of which by the system processors of the network management server SMCS performs the functions described below of the control unit CONTR2.

The memory unit IDB contains data related to the elements managed by the network management SMC1, i.e. for example network elements NE1 to NE9. The data stored in memory unit IDB corresponds to the data stored in the data set CDB1 and to this extent reference is made to description of the data set CDB1.

The memory unit PDB serves to store one or more program codes intended to be integrated in program codes installed on elements of telecommunication network TK1. Usually one or more such program codes are stored in memory unit PDB. It is also possible that as well as such program codes, further allocated data are stored in the memory unit PDB. Such data are for example allocated test codes, installation codes and/or description data. The memory unit PDB can thus contain some of the data contained in the memory unit CPDB of the utility server SC1. To this extent reference is made to the description of memory unit CPDB. It is advantageous here that the memory unit PDB in contrast to memory unit CPDB contains installation codes and test codes adapted to the specific conditions of the telecommunication network TK1 or the specific conditions of elements of the telecommunication network TK1. This adaptation can as described above be performed by the control unit CONTR1 of the utility server SC1. It is however also possible that this adaptation is performed in a similar manner by the control unit CONTR2 of the network management server SMCS.

The control unit CONTR2 comprises functions which support the installation of program codes on elements of telecommunication network TK1. Functionally the control unit CONTR2 here comprises four function units SCAI, UI, IL, SYNC.

The function unit UI is a user interface, advantageously a graphical user interface, by means of which the control unit CONTR2 can communicate with an operator OP of the network operator of telecommunication network TK1. It is also possible that the function of the function unit UI is performed by a network management client.

The function unit SCAI contacts a utility server on which is stored a set of program codes intended to be integrated in program codes installed on network elements. It also performs the authentication procedure AU for access to program codes of this set of program codes. It is possible that such a utility server is contacted on the instructions of the operator OP. It is however also possible that the contact takes place regularly or due to the occurrence of certain trigger conditions.

It is possible that as well as data related to the network elements managed by network management system SMC1, memory unit IDB also contains data related to the allocated utility server. The function unit SCAI now selects one or more of the utility servers stored in memory unit IDB and contacts these. This selection can be made by means of the data stored in the memory unit IDB related to these utility servers and to network elements allocated to these servers, and due to trigger conditions and on instruction by the operator OP.

For example function unit SCAI makes contact with utility server SC1. On contacting utility server SC1, the function unit SCAI performs the authentication procedure AU. In this way it determines the identity of the utility server contacted i.e. utility server SC1. It now compares this identity with the identities of utility servers which have the utility server properties described above and which, in a list kept by the function unit SCAI, are marked as utility servers from which program codes are accepted. It also performs the authentication procedure AU towards the utility server SC1 i.e. it identifies itself to the utility server SC1. In relation to this authentication reference is made to the description of function unit PAI of utility server SC1. The authentication procedure AU performed to identify the utility server can here be structured in precisely the same way as the authentication procedure AU performed to identify the network management system SMC1. To this extent reference is also made to the description of function unit PAI. It is however also possible that different authentication procedures are used for the two authentication procedures.

On access to program codes of the set of program codes of the utility server contacted, the function unit SCAI selects a program code from this code set in relation to the utility server. As already described in connection with the function unit PAI of the utility server SC1, the function unit SCAI thus for example sends a request message to the function unit PAI by means of which one or more of the program codes are selected. With reference to the further access possibilities of the function unit SCAI, reference is also made to the description of the function unit PAI. The program code or codes received on selection by the utility server are stored by the function unit SCAI in the memory unit PDB. As well as the program code or codes, the function unit SCAI also stores in the memory unit PDB other allocated test codes, installation codes or description data which are transmitted to the network management server SMCS with the program code or codes by the utility server on selection. Thus as well as the program code P, the specific test code TC and the specific installation code IC also transmitted are stored by the function unit SCAI in memory unit PDB.

The function unit IL transmits one or more selected program codes, which as described above are stored in the memory unit PDB, to one or more network elements of the telecommunication network TK1 for integration in the program code already installed on the element concerned. For this, for example, it transmits program code P together with a control instruction to the network elements NE1, NE2 and NE3. The control instruction causes an installation program IP present on the network elements NE1, NE2 or NE3 to integrate the received program code P in the program code already installed on the network element concerned. Thus it arranges for example for the installation program IP on the network element NE1 to integrate the program code P in the program code PC2 already present on the network element NE1.

It is possible that the function unit IL with the program code P also transmits an installation code and a test code to the network elements of the telecommunication network TK1. Before installation of the program code P, by means of the test code the installation program IP checks whether the program code P to be installed is compatible with the program code already installed on the network element in which the program code is to be integrated. Only if the result of this test is positive will the installation program IP then perform the integration. This integration takes place according to the instructions of the allocated installation code. It is however also possible that the installation code and test code are already present on the network element concerned and thus need not be transmitted by network management server SMCS. It is also possible that the installation code or test code stored in the memory unit PDB and allocated to a program code has been adapted by the function unit IL to the specific network element to which the test code, installation code and program code are transmitted for installation. Thus for example a test code TC' modified in this way and an installation code IC' modified in this way, as well as the program code P, are transmitted to network elements NE1, NE2 and NE3.

Here it is advantageous for the selected program code to be transmitted to one or more network elements of telecommunication network TK1 on instruction from the operator OP, i.e. the network operator of the network management system SMC1. The actual activation of the integration may also take place only on explicit instruction from operator OP.

The function unit SYNC sends data related to the network elements managed by network management system SMC1 to the utility server, for example servers SC1, SC2 and SC3. It takes this data from the memory unit IDB and for example sends it to utility server SC1 which stores this data in the data set CDB1. It is here also possible that the function unit SYNC sends to the utility server only part of the data stored in the data set IDB. In particular, it is advantageous here that the function unit SYNC sends to a utility server only data related to network elements which are allocated to this utility server in the memory unit IDB.

## Claims

1. Process to support the installation of first program codes (P) on network elements (NE1 to NE9) of one or more telecommunication networks (TK1 to TK3), where in the process
- a utility server (SC1 to SC3) central for two or more network management systems (SMC1 to SMC3) stores a set (SP) of first program codes intended to be integrated in second program codes (PC2) installed on network elements (NE1 to NE9),
- the utility server (SC1 to SC3) restricts access to the set (SP) of first program codes and after performance of an authentication procedure (AU) allows the two or more network management systems (SMC1 to SMC3) access to first program codes (P) of the set (SP) of first program codes,
- one of the two or more network management systems (SMC1 to SMC3) upon access selects a first program code (P) from the set (SP) of first program codes,
- the utility server (SC1 to SC3) then transmits this selected first program code (P) to a network management server (SMCS) of this network management system (SMC1),
- the selected first program code (P) is transmitted to one or more network elements (NE1 to NE3) of the telecommunication network (TK1) of this network management system (SMC1) and is integrated in the second program code (PC2) installed on the respective network element (NE1 to NE3), and
- a specific test code (TC) for said selected first program code (P) is determined,
**characterized in that**
the test code (TC) is designed so that the network elements (NE1 to NE3) can by this means check, before integration of the selected first program code (P) in the second program code (PC2), if the selected first program code (P) is compatible with the second program code (PC2)already installed on the respective network element (NE1 to NE3).

2. The process to support the installation of first program codes (P) on network elements (NE1 to NE9) of one or more telecommunication networks (TK1 to TK3) according to claim 1 **characterized in that** the concerned network elements (NE1 to NE3), by means of the test code (TC), establish whether a particular second program code (PC2) or second program code (PC2) version is present on that network element and/or whether the second program code (PC2) configuration meets the requirements of the selected first program code (P).

3. The process to support the installation of first program codes (P) on network elements (NE1 to NE9) of one or more telecommunication networks (TK1 to TK3) according to claim 1 **characterized in that** the test code (TC) is transmitted together with the selected first program code (P) to the network elements (NE1 to NE3) in which the selected first program code (P) shall be integrated in the second program code (PC2).

4. The process according to claim 1 **characterized in that** the utility server calculates a specific preselection of first program codes (P) from the set (SP) of first program codes for the two or more network management systems (SMC1 to SMC3) and informs the accessing network management system (SMC1) of the specific preselection allocated to it from the set (SP) of first program codes.

5. The process according to claim 4 **characterized in that** the utility server calculates the specific preselection of first program codes (P) from the set (SP) of first program codes for the two or more network management systems (SMC1 to SMC3) based on criteria transmitted to it by the respective network management systems (SMC1 to SMC3).

6. The process according to claim 4 **characterized in that** the utility server calculates the specific preselection of first program codes (P) from the set (SP) of first program codes for the two or more network management systems (SMC1 to SMC3) based on data related to the network elements (NE1 to NE9) sent by the network management system (SMC1 to SMC3) managing said network elements.

7. Utility server (SC1 to SC3) to support the installation of first program codes (P) on network elements (NE1 to NE9) of a telecommunication network (TK1 to TK3), where
- the utility server (SC1 to SC3) is equipped with a first memory unit (CPDB) in which is stored a set (SP) of first program codes intended to be integrated in second program codes (PC2) installed on network elements (NE1 to NE3),
- the utility server (SC1 to SC3) is equipped with a control unit (CONTR1) designed to restrict access to the set (SP) of first program codes and after performance of an authentication procedure (AU) allows one or more network management systems (SMCP1 to SMCP3) access to first program codes of the set (SP) of first program codes,
- the control unit (CONTR1) is further designed so that upon access it allows the one or more network management systems (SMC1) to select a first program code (P) from the set (SP) of first program codes,
- the control unit (CONTR1) is further designed so that it sends the selected first program code (P) to a network management server (SMCS) of this network management system (SMC1), and
- the control unit (CONTR1) is further designed so that it calculates a specific test code (TC) for the selected first program code (P) and transmits it together with said selected first program code (P) to the network management server (SMCS) of this network management system (SMC1),
**characterized in that**
the control unit (CONTR1) is designed so that it determines and adapts the test code (TC) to the selected first program code (P) by means of internal data related to the network elements (NE1 to NE3) in which the selected first program code (P) is to be integrated, and so that the network elements (NE1 to NE3) can by this means check, before integration of the selected first program code (P) in the second program code (PC2), if the selected first program code (P) is compatible with the second program code (PC2)already installed on the respective network element (NE1 to NE3).

8. Utility server (SC1 to SC3) according to claim 7, where the control unit (CONTR1) is further designed so that it calculates a specific preselection (PSDB1 to PSDB3) from the set (SP) of first program codes for one or more of the network management systems (SMC1 to SMC3) and informs an accessing network management system (SMC1) of the specific preselection (PSDB1) allocated to it from the set (SP) of first program codes.

9. Utility server (SC1 to SC3) according to claim 7, where the control unit (CONTR1) is further designed so that it calculates a specific preselection (PSDB1 to PSDB3) from the set (SP) of first program codes for one or more of the network management systems (SMC1 to SMC3) and restricts access by an accessing network management system (SMC1) to the specific preselection (PSDB1) allocated to it.

10. Utility server (SC1 to SC3) according to claim 8 or 9, where the control unit (CONTR1) is further designed so that it determines the specific preselection (PSDB1 to PSDB3) by means of criteria transmitted to it by the respective network management system (SMC1).

11. Utility server (SC1 to SC3) according to claim 8 or 9, where the control unit (CONTR1) is further designed so that it calculates the specific preselection (PSDB1 to PSDB3) by means of data (CDB1 to CDB3) related to the network elements (NE1 to NE9) managed by the network management system (SMC1 to SMC3) concerned.

12. Network management server (SMCS) of a network management system (SMC1) of a telecommunication network (TK1) to support the installation of first program codes (P) on network elements (NE1 to NE9) of the telecommunication network (TK1), where the network management server (SMCS) is equipped with a control unit (CONTR2) designed to contact a utility server (SC1 to SC3) on which is stored a set (SP) of first program codes intended to be integrated in second program codes (PC2) installed on the network elements (NE1 to NE3), and that it performs an authentication procedure (AU) upon access to the first program code of the set (SP) of first program codes,
- the control unit (CONTR2) is further designed so that upon access to the utility server (SC1 to SC3) it selects a first program code (P) from the set (SP) of first program codes.
- the control unit (CONTR2) is further designed so that from the utility server (SC1 to SC3) it receives the first selected program code (P) and stores this in a memory unit (PDB) of the network management server (SMCS),
- the control unit (CONTR2) is further designed so that it transmits the selected first program code (P) to one or more network elements (NE1 to NE3) of the telecommunication network (TK1) for integration in the second program code (PC2) installed on the respective network element (NE1 to NE3),
- the control unit (CONTR2) is further designed to receive a test code (TC) associated to said selected first program code (P) from the utility server (SC1 to SC3), store it in a network management server memory unit (PDB), and transmit it together with the program code (P) to the one or more network elements (NE1 to NE3) of the telecommunication network (TK1).
**characterized in that**
the control unit (CONTR2) is further designed so that it adapts the test code (TC) associated to said selected first program code (P) by means of internal data related to the network elements (NE1 to NE3) in which the selected first program code (P) is to be integrated, and so that the network elements (NE1 to NE3) can by this means check, before integration of the selected first program code (P) in the second program code (PC2), if the selected first program code (P) is compatible with the second program code (PC2)already installed on the respective network element (NE1 to NE3).

13. The Network management server (SMCS) according to claim 12, where the network management server (SMCS) is equipped with a second memory unit (IDB) in which are stored data related to the network elements (NE1 to NE9) managed by the network management system (SMC1) and to the allocated utility servers (SC1 to SC3), and that the control unit (CONTR2) is further designed so that it selects a utility server (SC1) from the utility servers (SC1 to SC3) stored in the second memory unit (IDB) and contacts the selected utility server (SC1).

## Patentansprüche

1. Verfahren zur Unterstützung der Installation von ersten Programmcodes (P) auf Netzelementen (NE1 bis NE9) eines oder mehrerer Telekommunikationsnetze (TK1 bis TK3), wobei bei dem Verfahren
- ein für zwei oder mehr Netzwerkmanagementsysteme (SMC1 bis SMC3) zentraler Dienstleistungs-Server (SC1 bis SC3) einen Satz (SP) von ersten Programmcodes speichert, die dazu bestimmt sind, in auf Netzelementen (NE1 bis NE9) installierten zweiten Programmcodes (PC2) integriert zu werden,
- der Dienstleistungs-Server (SC1 bis SC3) den Zugriff auf den Satz (SP) von ersten Programmcodes beschränkt und den zwei oder mehreren Netzwerkmanagementsystemen (SMC1 bis SMC3) nach Durchführung einer Authentisierungs-Prozedur (AU) Zugriff auf erste Programmcodes (P) des Satzes (SP) von ersten Programmcodes gestattet,
- eines der zwei oder mehr Netzwerkmanagementsysteme (SMC1 bis SMC3) beim Zugriff einen ersten Programmcode (P) aus dem Satz (SP) von ersten Programmcodes auswählt,
- der Dienstleistungs-Server (SC1 bis SC3) den ausgewählten ersten Programmcode (P) zu einem Netzwerkmanagement-Server (SMCS) dieses Netzwerkmanagementsystems (SMC1) übermittelt, und
- der ausgewählte erste Programmcode (P) an ein oder mehrere Netzelemente (NE1 bis NE3) des Telekommunikationsnetzes (TK1) dieses Netzwerkmanagementsystems (SMC1) übermittelt wird und in den auf dem jeweiligen Netzelement (NE1 bis NE3) installierten zweiten Programmcode (PC2) integriert wird, und
- ein spezieller Testcode (TC) für den ausgewählten ersten Programmcode (P) bestimmt wird,
**dadurch gekennzeichnet, dass**
der Testcode (TC) so konstruiert ist, dass die Netzelemente (NE1 bis NE3) mittels diesem vor der Integration des ausgewählten ersten Programmcodes (P) in den zweiten Programmcode (PC2) überprüfen können, ob der ausgewählte erste Programmcode (P) kompatibel mit dem zweiten, bereits auf dem jeweiligen Netzelement (NE1 bis NE3) installierten Programmcode (PC2) ist.

2. Das Verfahren zur Unterstützung der Installation von ersten Programmcodes (P) auf Netzelementen (NE1 bis NE9) eines oder mehrerer Telekommunikationsnetze (TK1 bis TK3) gemäß Anspruch 1, **dadurch gekennzeichnet, dass** die betreffenden Netzelemente (NE1 bis NE3) mittels dem Testcode (TC) bestimmen, ob der spezielle zweite Programmcode (PC2) oder eine Version des zweiten Programmcodes (PC2) auf dem Netzelement vorhanden ist und/oder ob die Konfiguration des zweiten Programmcodes (PC2) die Anforderungen des ausgewählten ersten Programmcodes (P) erfüllt.

3. Das Verfahren zur Unterstützung der Installation von ersten Programmcodes (P) auf Netzelementen (NE1 bis NE9) eines oder mehrerer Telekommunikationsnetze (TK1 bis TK3) gemäß Anspruch 1, **dadurch gekennzeichnet, dass** der Testcode (TC) zusammen mit dem ausgewählten ersten Programmcode (P) zu den Netzelementen (NE1 bis NE3) übertragen wird, in denen der ausgewählte erste Programmcode (P) in den zweiten Programmcode (PC2) integriert werden muss.

4. Das Verfahren gemäß Anspruch 1, **dadurch gekennzeichnet, dass** der Dienstleistungs-Server eine spezielle Vorauswahl von ersten Programmcodes (P) aus dem Satz erster Programmcodes (SP) für die zwei oder mehr Netzwerkmanagementsysteme (SMC1 bis SMC3) berechnet und das zugreifende Netzwerkmanagementsystem (SMC1) über die ihm zugeordnete spezielle Vorauswahl aus dem Satz erster Programmcodes (SP) informiert.

5. Das Verfahren gemäß Anspruch 4, **dadurch gekennzeichnet, dass** der Dienstleistungs-Server die spezielle Vorauswahl von ersten Programmcodes (P) aus dem Satz erster Programmcodes (SP) für die zwei oder mehr Netzwerkmanagementsysteme (SMC1 bis SMC3) auf der Grundlage von Kriterien berechnet, die vom entsprechenden Netzwerkmanagementsystem (SMC1 bis SMC3) an ihn übertragen werden.

6. Das Verfahren gemäß Anspruch 4, **dadurch gekennzeichnet, dass** der Dienstleistungs-Server die spezielle Vorauswahl von ersten Programmcodes (P) aus dem Satz erster Programmcodes (SP) für die zwei oder mehr Netzwerkmanagementsysteme (SMC1 bis SMC3) auf der Grundlage von Daten berechnet, die in Bezug zu den Netzelementen (NE1 bis NE9) stehen und von dem Netzwerkmanagementsystem (SMC1 bis SMC3) gesendet werden, das die Netzelemente verwaltet.

7. Dienstleistungs-Server (SC1 bis SC3) zur Unterstützung der Installation von ersten Programmcodes (P) auf Netzelementen (NE1 bis NE9) eines Telekommunikationsnetzes (TK1 bis TK3), wobei
- der Dienstleistungs-Server (SC1 bis SC3) mit einer ersten Speichereinheit (CPDB) versehen ist, in der ein Satz (SP) von ersten Programmcodes gespeichert ist, die dazu bestimmt sind, in auf Netzelementen (NE1 bis NE3) installierten zweiten Programmcodes (PC2) integriert zu werden,
- der Dienstleistungs-Server (SC1 bis SC3) mit einer Steuereinheit (CONTK1) versehen ist, die so ausgestaltet ist, dass sie den Zugriff auf den Satz (SP) von ersten Programmcodes beschränkt und einem oder mehreren Netzwerkmanagementsystemen (SMC1 bis SMC3) nach Durchführung einer Authentisierungs-Prozedur (AU) Zugriff auf erste Programmcodes des Satzes (SP) von ersten Programmcodes gestattet,
- die Steuereinheit (CONTR1) weiter so ausgestaltet ist, dass sie es einem der ein oder mehreren Netzwerkmanagementsystemen (SMC1) beim Zugriff ermöglicht, einen ersten Programmcode (P) aus dem Satz (SP) von ersten Programmcodes auszuwählen, und
- die Steuereinheit (CONTR1) weiter so ausgestaltet ist, dass sie den ausgewählten ersten Programmcode (P) zu einem Netzwerkmanagement-Server (SMCS) dieses Netzwerkmanagementsystems (SMC1) sendet, und
- die Steuereinheit (CONTR1) weiter so ausgestaltet ist, dass sie einen speziellen Testcode (TC) für den ausgewählten ersten Programmcode (P) berechnet und ihn zusammen mit dem ausgewählten ersten Programmcode (P) zum Netzwerkmanagement-Server (SMCS) dieses Netzwerkmanagementsystems (SMC 1 ) sendet,
**dadurch gekennzeichnet, dass**
die Steuereinheit (CONTR1) so ausgestaltet ist, dass sie den Testcode (TC) bestimmt und ihn mittels interner Daten bezüglich der Netzelemente (NE1 bis NE3), in die der ausgewählte erste Programmcode (P) zu integrieren ist, an den ausgewählten ersten Programmcode (P) anpasst, so dass die Netzelemente (NE1 bis NE3) mit diesem Mittel vor der Integration des ausgewählten ersten Programmcodes (P) in den zweiten Programmcode (PC2) überprüfen können, ob der ausgewählte erste Programmcode (P) kompatibel zum zweiten Programmcode (PC2) ist, der bereits auf dem entsprechenden Netzelement (NE1 bis NE3) installiert ist.

8. Dienstleistungs-Server (SC1 bis SC3) nach Anspruch 7, wobei die Steuereinheit (CONTR1) weiter so ausgestaltet ist, dass sie eine spezifische Vorauswahl (PSDB1 bis PSDB3) aus dem Satz (SP) von ersten Programmcodes für eines oder mehrere der Netzwerkmanagementsysteme (SMC 1 bis SMC3) berechnet und einem zugreifenden Netzwerkmanagementsystem (SMC1) gegenüber die ihm zugeordnete spezifische Vorauswahl (PSDB1) aus dem Satz (SP) von ersten Programmcodes kenntlich macht.

9. Dienstleistungs-Server (SC1 bis SC3) nach Anspruch 7, wobei die Steuereinheit (CONTR1) weiter so ausgestaltet ist, dass sie eine spezifische Vorauswahl (PSDB1 bis PSDB3) aus dem Satz (SP) von ersten Programmcodes für eines oder mehrere der Netzwerkmanagementsysteme (SMC 1 bis SMC3) berechnet und den Zugriff eines zugreifenden Netzwerkmanagementsystems (SMC1) auf die ihm zugeordnete spezifische Vorauswahl (PSDB1) beschränkt.

10. Dienstleistungs-Server (SC1 bis SC3) nach Anspruch 8 oder 9, wobei die Steuereinheit (CONTR1) weiter so ausgestaltet ist, dass sie die spezifische Vorauswahl (PSDB1 bis PSDB3) mittels Kriterien ermittelt, die ihr von dem jeweiligen Netzwerkmanagementsystem (SMC1) übermittelt werden.

11. Dienstleistungs-Server (SC1 bis SC3) nach Anspruch 8 oder 9, wobei die Steuereinheit (CONTR1) weiter so ausgestaltet ist, dass sie die spezifische Vorauswahl (PSDB1 bis PSDB3) mittels Daten (CDB1 bis CDB3) über die von dem jeweiligen Netzwerkmanagementsystem (SMC1 bis SMC3) verwalteten Netzelemente (NE1 bis NE9) berechnet.

12. Netzwerkmanagement-Server (SMCS) eines Netzwerkmanagementsystems (SMC1) eines Telekommunikationsnetzes (TK1) zur Unterstützung der Installation von ersten Programmcodes (P) auf Netzelementen (NE1 bis NE9) des Telekommunikationsnetzes (TK1), wobei der Netzwerkmanagement-Server (SMCS) mit einer Steuereinheit (CONTR2) versehen ist, die so ausgestaltet ist, dass sie einen Dienstleistungs-Server (SC1 bis SC3) kontaktiert, auf dem ein Satz (SP) von ersten Programmcodes gespeichert ist, die dazu bestimmt sind, in auf Netzelementen (NE1 bis NE3) installierten zweiten Programmcodes (PC2) integriert zu werden, und dass sie beim Zugriff auf erste Programmcodes des Satzes (SP) von ersten Programmcodes eine Authentisierungs-Prozedur (AU) durchführt,
- die Steuereinheit (CONTR2) weiter so ausgestaltet ist, dass sie beim Zugriff gegenüber dem Dienstleistungs-Server (SC1 bis SC3) einen ersten Programmcode (P) aus dem Satz (SP) von ersten Programmcodes auswählt,
- die Steuereinheit (CONTR2) weiter so ausgestaltet ist, dass sie von dem Dienstleistungs-Server (SC1 bis SC3) den ausgewählten ersten Programmcode (P) empfängt und in einer Speichereinheit (PDB) des Netzwerkmanagement-Servers (SMCS) abspeichert, und
- die Steuereinheit (CONTR2) weiter so ausgestaltet ist, dass sie den ausgewählten ersten Programmcode (P) an ein oder mehrere Netzelemente (NE1 bis NE3) des Telekommunikationsnetzes (TK1) zur Integration in den auf dem jeweiligen Netzelement (NE1 bis NE3) installierten zweiten Programmcode (PC2) übermittelt,
- die Steuereinheit (CONTR2) weiter so ausgestaltet ist, dass sie vom Dienstleitungs-Server (SC1 bis SC3) einen speziellen Testcode (TC), der dem ausgewählten ersten Programmcode (P) zugeordnet ist, empfängt, ihn in einer Speichereinheit (PDB) des Netzwerkmanagementservers speichert und ihn zusammen mit dem Programmcode (P) zu dem einen oder mehreren Netzelementen (NE1 bis NE3) des Telekommunikationsnetzes (TK1) sendet,
**dadurch gekennzeichnet, dass**
die Steuereinheit (CONTR2) weiter so ausgestaltet ist, dass sie den Testcode (TC), der dem ausgewählten ersten Programmcode (P) zugeordnet ist, mittels interner Daten bezüglich der Netzelemente (NE1 bis NE3), in die der ausgewählte erste Programmcode (P) zu integrieren ist, so anpasst, dass die Netzelemente (NE1 bis NE3) mit diesem Mittel vor der Integration des ausgewählten ersten Programmcodes (P) in den zweiten Programmcode (PC2) überprüfen können, ob der ausgewählte erste Programmcode (P) kompatibel zum zweiten Programmcode (PC2) ist, der bereits auf dem entsprechenden Netzelement (NE1 bis NE3) installiert ist.

13. Netzwerkmanagement-Server (SMCS) nach Anspruch 12, wobei der Netzwerkmanagement-Server (SMCS) mit einer zweiten Speichereinheit (IDB) versehen ist, in der Daten über die von dem Netzwerkmanagementsystem (SMC1) verwalteten Netzelemente (NE1 bis NE9) und zugeordneten Dienstleistungs-Servern (SC1 bis SC3) gespeichert sind und dass die Steuereinheit (CONTR2) weiter so ausgestaltet ist, dass sie einen Dienstleistungs-Server (SC1) aus den in der zweiten Speichereinheit (IDB) gespeicherten Dienstleistungs-Servern (SC1 bis SC3) auswählt und den ausgewählten Dienstleistungs-Server (SC1) kontaktiert.

## Revendications

1. Procédé pour supporter l'installation de premiers codes de programme (P) sur des éléments de réseau (NE1 à NE9) d'un ou de plusieurs réseaux de télécommunication (TK1 à TK3), dans lequel
un serveur d'utilité (SC1 à SC3) central pour deux systèmes de gestion de réseau (SMC1 à SMC3) ou plus stocke un ensemble (SP) de premiers codes de programme destinés à être intégrés dans des seconds codes de programme (PC2) installés sur des éléments de réseau (NE1 à NE9),
le serveur d'utilité (SC1 à SC3) restreint l'accès à l'ensemble (SP) des premiers codes de programme et après la performance d'une procédure d'authentification (AU) permet aux deux systèmes de gestion de réseau (SMC1 à SMC3) ou plus d'accéder aux premiers codes de programme (P) de l'ensemble (SP) de premiers codes de programme,
l'un des deux systèmes de gestion de réseau (SMC1 à SMC3) ou plus lors de l'accès sélectionne un premier code de programme (P) parmi l'ensemble (SP) de premiers codes de programme,
le serveur d'utilité (SC1 à SC3) transmet ensuite ce premier code de programme (P) sélectionné à un serveur de gestion de réseau (SMCS) de ce système de gestion de réseau (SMC1), et
le premier code de programme (P) sélectionné est transmis à un ou plusieurs éléments de réseau (NE1 à NE3) du réseau de télécommunication (TK1) de ce système de gestion de réseau (SMC1) et est intégré dans le second code de programme (PC2) installé sur l'élément de réseau respectif (NE1 à NE3), et
un code d'essai spécifique (TC) pour ledit premier code de programme (P) sélectionné est déterminé,
**caractérisé en ce que**
le code d'essai (TC) est conçu afin que les éléments de réseau (NE1 à NE3) puissent par ce moyen vérifier, avant l'intégration du premier code de programme (P) sélectionné dans le second code de programme (PC2), si le premier code de programme (P) sélectionné est compatible avec le second code de programme (PC2) déjà installé sur l'élément de réseau respectif (NE1 à NE3).

2. Procédé pour supporter l'installation de premiers codes de programme (P) sur des éléments de réseau (NE1 à NE9) d'un ou de plusieurs réseaux de télécommunication (TK1 à TK3) selon la revendication 1, **caractérisé en ce que** les éléments de réseau (NE1 à NE3) concernés, au moyen du code d'essai (TC), établissent si un second code de programme (PC2) ou une version de second code de programme (PC2) donné est présent sur cet élément de réseau et/ou si la configuration du second code de programme (PC2) respecte les exigences du premier code de programme (P) sélectionné.

3. Procédé pour supporter l'installation de premiers codes de programme (P) sur des éléments de réseau (NE1 à NE9) d'un ou de plusieurs réseaux de télécommunication (TK1 à TK3) selon la revendication 1, **caractérisé en ce que** le code d'essai (TC) est transmis avec le premier code de programme (P) sélectionné aux éléments de réseau (NE1 à NE3) dans lesquels le premier code de programme (P) sélectionné doit être intégré dans le second code de programme (PC2).

4. Procédé selon la revendication 1, **caractérisé en ce que** le serveur d'utilité calcule une présélection spécifique de premiers codes de programme (P) parmi l'ensemble (SP) de premiers codes de programme pour les deux systèmes de gestion de réseau (SMC1 à SMC3) ou plus et informe le système de gestion de réseau (SMC1) accédant de la présélection spécifique (PSDB1) qui lui est attribuée parmi l'ensemble (SP) de premiers codes de programme.

5. Procédé selon la revendication 4, **caractérisé en ce que** le serveur d'utilité calcule la présélection spécifique de premiers codes de programme (P) parmi l'ensemble (SP) de premiers codes de programme pour les deux systèmes de gestion de réseau (SMC1 à SMC3) ou plus sur la base des critères qui lui ont été transmis par les systèmes de gestion de réseau (SMC1 à SMC3) respectifs.

6. Procédé selon la revendication 4, **caractérisé en ce que** le serveur d'utilité calcule la présélection spécifique de premiers codes de programme (P) parmi l'ensemble (SP) de premiers codes de programme pour les deux systèmes de gestion de réseau (SMC1 à SMC3) ou plus sur la base des données associées aux éléments de réseau (NE1 à NE9) envoyées par le système de gestion de réseau (SMC1 à SMC3) gérant lesdits éléments de réseau.

7. Serveur d'utilité (SC1 à SC3) pour supporter l'installation de premiers codes de programme (P) sur des éléments de réseau (NE1 à NE9) d'un réseau de télécommunication (TK1 à TK3), dans lequel
le serveur d'utilité (SC1 à SC3) est équipé d'une première unité mémoire (CPDB) dans laquelle est stockée un ensemble (SP) de premiers codes de programme destinés à être intégrés dans des seconds codes de programme (PC2) installés sur des éléments de réseau (NE1 à NE3),
le serveur d'utilité (SC1 à SC3) est équipé d'une unité de contrôle (CONTR1) conçue pour restreindre l'accès à l'ensemble (SP) de premiers codes de programme et après la réalisation d'une procédure d'authentification (AU) pour autoriser l'accès d'un ou de plusieurs systèmes de gestion de réseau (SMC1 à SMC3) à des premiers codes de programme de l'ensemble (SP) de premiers codes de programme,
l'unité de contrôle (CONTR1) est en outre conçue afin que lors de l'accès, elle permette au ou aux systèmes de gestion de réseau (SMC1) de sélectionner un premier code de programme (P) parmi l'ensemble (SP) de premiers codes de programme, et
l'unité de contrôle (CONTR1) est en outre conçue afin qu'elle envoie le premier code de programme (P) sélectionné à un serveur de gestion de réseau (SMCS) de ce système de gestion de réseau (SMC1), et
l'unité de contrôle (CONTR1) est en outre conçue afin qu'elle calcule un code d'essai spécifique (TC) pour le premier code de programme (P) sélectionné et le transmette avec ledit premier code de programme (P) sélectionné au serveur de gestion de réseau (SMCS) de ce système de gestion de réseau (SMC1),
**caractérisé en ce que**
l'unité de contrôle (CONTR1) est conçue afin qu'elle détermine et adapte le code d'essai (TC) au premier code de programme (P) sélectionné au moyen des données internes associées aux éléments de réseau (NE1 à NE3) dans lesquels le premier code de programme (P) sélectionné doit être intégré, et afin que les éléments de réseau (NE1 à NE3) puissent par ce moyen, vérifier, avant l'intégration du premier code de programme (P) sélectionné dans le second code de programme (PC2), si le premier code de programme (P) sélectionné est compatible avec le second code de programme (PC2) déjà installé sur l'élément de réseau (NE1 à NE3) respectif.

8. Serveur d'utilité (SC1 à SC3) selon la revendication 7, dans lequel l'unité de contrôle (CONTR1) est en outre conçue afin qu'elle calcule une présélection spécifique (PSDB1 à PSDB3) parmi l'ensemble (SP) de premiers codes de programme pour un ou plusieurs des systèmes de gestion de réseau (SMC1 à SMC3) et informe un système de gestion de réseau (SMC1) accédant de la présélection spécifique (PSDB1) qui lui est attribuée parmi l'ensemble (SP) de premiers codes de programme.

9. Serveur d'utilité (SC1 à SC3) selon la revendication 7, dans lequel l'unité de contrôle (CONTR1) est en outre conçue afin qu'elle calcule une présélection spécifique (PSDB1 à PSDB3) parmi l'ensemble (SP) de premiers codes de programme pour un ou plusieurs des systèmes de gestion de réseau (SMC1 à SMC3) et limite l'accès par un système de gestion de réseau (SMC1) accédant à la présélection spécifique (PSDB1) qui lui est attribuée.

10. Serveur d'utilité (SC1 à SC3) selon la revendication 8 ou 9, dans lequel l'unité de contrôle (CONTR1) est en outre conçue afin qu'elle détermine la présélection spécifique (PSDB1 à PSDB3) au moyen de critères qui lui sont transmis par le système de gestion de réseau (SMC1) respectif.

11. Serveur d'utilité (SC1 à SC3) selon la revendication 8 ou 9, dans lequel l'unité de contrôle (CONTR1) est en outre conçue afin qu'elle calcule la présélection spécifique (PSDB1 à PSDB3) au moyen de données (CDB1 à CDB3) associées aux éléments de réseau (NE1 à NE9) gérés par le système de gestion de réseau (SMC1 à SMC3) concerné.

12. Serveur de gestion de réseau (SMCS) d'un système de gestion de réseau (SMC1) d'un réseau de télécommunication (TK1) pour supporter l'installation de premiers codes de programme (P) sur des éléments de réseau (NE1 à NE9) du réseau de télécommunication (TK1), dans lequel le serveur de gestion de réseau (SMCS) est équipé d'une unité de contrôle (CONTR2) conçue pour contacter un serveur d'utilité (SC1 à SC3) sur lequel est stocké un ensemble (SP) de premiers codes de programme destiné à être intégré dans des seconds codes de programme (PC2) installés sur les éléments de réseau (NE1 à NE2), et pour réaliser une procédure d'authentification (AU) lors de l'accès au premier code de programme de l'ensemble (SP) de premiers codes de programme,
l'unité de contrôle (CONTR2) est en outre conçue afin que lors de l'accès au serveur d'utilité (SC1 à SC3), elle sélectionne un premier code de programme (P) parmi l'ensemble (SP) de premiers codes de programme,
l'unité de contrôle (CONTR2) est en outre conçue afin que du serveur d'utilité (SC1 à SC3), elle reçoive le premier code de programme (P) sélectionné et le stocke dans une unité de mémoire (PDB) du serveur de gestion de réseau (SMCS), et
l'unité de contrôle (CONTR2) est en outre conçue afin qu'elle transmette le premier code de programme (P) sélectionné à un ou plusieurs éléments de réseau (NE1 à NE3) du réseau de télécommunication (TK1) à des fins d'intégration dans le second code de programme (PC2) installé sur l'élément de réseau respectif (NE1 à NE3),
l'unité de contrôle (CONTR2) est en outre conçue afin qu'elle reçoive un code d'essai (TC) associé audit premier code de programme (P) sélectionné du serveur d'utilité (SC1 à SC3), le stocke dans une unité de mémoire de serveur de gestion de réseau (PBD), et le transmette avec le code de programme (P) à un ou plusieurs éléments de réseau (NE1 à NE3) du réseau de télécommunication (TK1),
**caractérisé en ce que**
l'unité de contrôle (CONTR2) est en outre conçue afin qu'elle adapte le code d'essai (TC) associé audit premier code de programme (P) sélectionné au moyen des données internes associées aux éléments de réseau (NE1 à NE3) dans lesquels le premier code de programme (P) sélectionné doit être intégré, et afin que les éléments de réseau (NE1 à NE3) puissent par ce moyen, vérifier, avant l'intégration du premier code de programme (P) sélectionné dans le second code de programme (PC2), si le premier code de programme (P) sélectionné est compatible avec le second code de programme (PC2) déjà installé sur l'élément de réseau (NE1 à NE3) respectif.

13. Serveur de gestion de réseau (SMCS) selon la revendication 12, dans lequel le serveur de gestion de réseau (SMCS) est équipé d'une seconde unité de mémoire (IDB) dans laquelle sont stockées les données associées aux éléments de réseau (NE1 à NE9) gérés par le système de gestion de réseau (SMC1) et aux serveurs d'utilité (SC1 à SC3) attribués, et **caractérisé en ce que** l'unité de contrôle (CONTR2) est en outre conçue afin qu'elle sélectionne un serveur d'utilité (SC1) parmi les serveurs d'utilité (SC1 à SC3) stockés dans la seconde unité de mémoire (IDB) et contacte le serveur d'utilité (SC1) sélectionné.
